(19) **Europäisches Patentamt**
**European Patent Office**
**Office européen des brevets**

(11) **EP 2 078 922 B1**

(12) **EUROPÄISCHE PATENTSCHRIFT**

(45) Veröffentlichungstag und Bekanntmachung des Hinweises auf die Patenterteilung:
**16.03.2011 Patentblatt 2011/11**

(51) Int Cl.:
*G01B 7/14* (2006.01)  *G01B 7/02* (2006.01)
*H01Q 1/22* (2006.01)

(21) Anmeldenummer: **09005882.7**

(22) Anmeldetag: **29.01.2003**

(54) **Abstandsmessvorrichtung und Verfahren zur Bestimmung eines Abstands**

Distance measuring device and method for calculating a distance

Dispositif de mesure d'intervalle et procédé de détermination d'un intervalle

(84) Benannte Vertragsstaaten:
**DE ES FR GB IT**

(30) Priorität: **13.02.2002 DE 10205904**

(43) Veröffentlichungstag der Anmeldung:
**15.07.2009 Patentblatt 2009/29**

(62) Dokumentnummer(n) der früheren Anmeldung(en) nach Art. 76 EPÜ:
**03739449.1 / 1 474 651**

(73) Patentinhaber: **Astyx GmbH**
**85521 Ottobrunn (DE)**

(72) Erfinder: **Trummer, Günther**
**91083 Baiersdorf (DE)**

(74) Vertreter: **Kunz, Herbert et al**
**Heisse Kursawe Eversheds**
**Rechtsanwälte Partnerschaft**
**Maximiliansplatz 5**
**80333 München (DE)**

(56) Entgegenhaltungen:
**EP-A- 0 935 127      DE-A- 19 903 183**
**DE-A- 19 944 103     US-A- 4 901 628**

# EP 2 078 922 B1

**Beschreibung**

Die vorliegende Erfindung betrifft eine Abstandsmessvorrichtung nach dem Oberbegriff des Anspruchs 1 sowie ein Verfahren zur Bestimmung eines Abstands.

Eine bekannte Abstandsmessvorrichtung in Form eines Füllstandsmessgerätes ist aus der EP 0 935 127 bekannt. Hierzu ermöglicht die bekannte Antenneneinrichtung eine Mikrowelleneinkopplung über einen Wellenleiter, der als Hohlleiter angeordnet ist. Am stirnseitigen Ende des Hohlleiters befindet sich ein planares Strahlelement, das auf der Unterseite eines plattenförmigen Substrats, das aus dielektrischem Material besteht, aufgebracht ist. Über den Erregerstift wird eine Mikrowelle als ein Sendesignal eingekoppelt.

Es ist allgemein bekannt, dass zur Detektion und Erfassung der Kolbenposition von fluidischen Linearantrieben oder von pneumatischen und hydraulischen Zylindern als Leitungsstruktur Abstandsmessvorrichtungen eingesetzt werden, welche den Abstand zwischen dem Kolben als Reflektionskörper innerhalb der Leitungsstruktur und dem Zylinderdeckel bzw. Leitungsstrukturboden messen. Die Kolbenpositionserfassung an Zylindern kann sowohl diskret, d. h. an diskreten Stellen, als auch kontinuierlich, d. h. ständig während des Betriebes, erfolgen.

Eine diskrete Kolbenpositionsbestimmung wird in der Regel dazu herangezogen, die Ausführung bzw. Beendigung einer Kolbenbewegung an eine Ablaufsteuerung (z. B. SPS) zurückzumelden, um somit beispielsweise den nächsten Ablaufschritt einleiten zu können. Hierzu werden überwiegend magnetfeldempfindliche Sensoren bzw. Sensoreinrichtungen verwendet, welche das Magnetfeld eines Permanentmagneten, der sich an dem Zylinderkolben befindet, detektieren. Die dabei eingesetzten Sensoren werden extern an das Zylinderrohr montiert. Bewegt sich der Kolben in den Erfassungsbereich eines solchen Sensors, so erkennt dieser die Anwesenheit des Zylinderkolbens, und zwar durch das Zylinderrohr hindurch. Hierfür ist überwiegend die Verwendung von nichtferromagnetischen Werkstoffen erforderlich und beschränkt somit die konstruktiven Eigenschaften bzw. Anwendungen des Antriebes. Soll hingegen eine andere Position des Kolbens detektiert werden, so muss der Sensor entsprechend mechanisch justiert bzw. neu justiert werden. Für jede zusätzlich zu erfassende Position muss folglich ein weiterer Sensor montiert werden, und zwar mit den damit verbundenen zusätzlichen Material-, Montage-, Justage- und Installationskosten.

Nachteilig ist hierbei ebenso, dass die Montage in der Regel vor Ort beim Kunden geschieht. Erschwerend kommt hinzu, dass dabei der Zylinder bereits in einer schwer zugänglichen. Maschine eingebaut sein kann und die Einstellung der Schaltabstände, durch mechanisches Verschieben der extern montierten Magnetschalter nicht mehr möglich ist. Ferner wird für diese extern angebauten Sensoren zusätzlicher Einbauraum benötigt. Damit die Zugänglichkeit und Robustheit des Sensors gewährleistet werden kann, ist häufig zusätzlicher konstruktiver Aufwand erforderlich.

Diese Art von Sensoren sind überwiegend als magnetfeldempfindliche Sensoren ausgeführt und sind als Reed-Schalter, magnetoresistive (MR), giant magnetoresistive (GMR), Hall-Schalter oder magnetinduktive Näherungsschalter bekannt. Durch die Detektion des Magnetfeldes ist eine aufwendige Abstimmung des Magneten auf den Sensor bzw. auf die Sensoreinrichtung erforderlich. Zudem werden durch dieses Messprinzip die möglichen Anwendungen durch störende statische und dynamische Magnetfelder (EMV, Feld eines nahen Zylinders) sowie das Temperaturverhalten des Sensors beschränkt.

Zur kontinuierlichen Kolbenpositionsmessung werden gewöhnlich Meßsysteme verwendet, die potentiometrisch, nach dem LVDT -Prinzip (Linear Variable Differential Transformer) oder nach dem Ultraschall-Prinzip arbeiten. Die Kolbenposition wird bei diesen Systemen kontinuierlich und überwiegend als analoges Spannungssignal ausgegeben. Sensoren nach dem LVDT-Prinzip benötigen beim Einschalten immer einen Referenzdurchlauf zur Voreinstellung. Ultraschallsensoren sind für die Wegmessung in Pneumatik- und Hydraulikzylindern nur bedingt geeignet, da die Messgenauigkeit sich mit dem Zylinderdruck ändert. Als Ergänzung zu diesen Systemen sind auch inkrementale Wegmessungen bekannt. Diese Systeme werden beispielsweise durch die Kodierung der Kolbenstange realisiert und können somit nur zur relativen Wegmessung verwendet werden.

Zusammenfassend ist festzustellen, dass sowohl die bislang bekannte kontinuierliche als auch die diskrete Kolbenpositionsbestimmung nicht bzw. nur mit erheblichem konstruktiven Aufwand und den dadurch verbundenen hohen Kosten in einen Zylinder integriert werden können. Der erhebliche konstruktive Aufwand begründet sich dadurch, dass alle beschriebenen gängigen Sensorprinzipien auf die entsprechende Zylinderlänge angepasst werden müssen, da sie einen zu kurzen Erfassungsbereich besitzen.

Aufgabe der vorliegenden Erfindung ist es somit, eine Abstandsmessvorrichtung und ein Verfahren zur Bestimmung des Abstands zu schaffen, welche bzw. welches die oben aufgeführten Nachteile überwindet und eine kontinuierliche und somit diskretisierbare Abstandsbestimmung, eine einfache Handhabung und vielseitige Einsatzmöglichkeiten erlaubt.

Diese Aufgabe wird vorrichtungstechnisch mit den Merkmalen des Anspruchs 1 und verfahrenstechnisch mit den Merkmalen des Anspruchs 13 gelöst.

Erfindungsgemäß wird eine Leitungsstruktur bereitgestellt, die einen Einspeiseblock mit einem Einspeisungsbereich aufweist, der einen HF-Transceiver über einen Wellenleiter mit dielektrischen Haltesystemen mit der Koppelsonde verbindet. Mit dieser anmeldungsgemäßen Anordnung ist eine vollständige Integration der Koppelsonde mit der Auswerteelektronik in dem Deckel des Zylinders möglich. Zusätzliche extern zu montierende Teile sind somit nicht notwendig. Die entsprechenden Schaltabstände können über eine elektronische Schnittstelle extern vorzugsweise über die Auswerteelektronik eingestellt werden. Grundsätzlich ist die anmeldungsgemäße Abstandsmessvorrichtung unabhängig von der Zylinderlänge universell einsetzbar. Es hat sich darüber hinaus gezeigt, dass die Messergebnisse unabhängig vom Druck, Öl und der Luftfeuchtigkeit im Zylinder zuverlässig stimmen.

Erfindungsgemäß wird eine Abstandsmessvorrichtung und ein Verfahren zur Bestimmung eines Abstands zur Verfügung gestellt, wobei die Sensoreinrichtung ein Hochfrequenz- Einspeisesystem aufweist, das dazu dient, durch Abstrahlen und Empfangen von Wellen, einen bestimmten Abstand beispielsweise in einer Leitungsstruktur (Leitungsstruktur ist z.B. der Innenraum des Pneumatikzylinders = Rundhohlleiter) auszumessen, indem beispielsweise das Einspeisesystem in die Leitungsstruktur integriert wird. Aufgrund dieser Integration des Einspeisesystems wird erreicht, dass die Abstandsmessvorrichtung klein baut und nahezu keine bzw. geringe Umbaumaßnahmen erforderlich macht. Der gesamte Aufbau der anmeldungsgemäßen Abstandsvorrichtung kann somit ein sauberes, glattes Design aufgrund des Wegfalls einer Montagemöglichkeit für externe Sensoreinrichtungen aufweisen, bzw. beeinflusst die äußere Erscheinung nicht. Mit der anmeldungsgemäßen Abstandsmessvorrichtung wird eine Installationsersparnis erreicht, da der vorgefertigte Zylinder lediglich ein Anschlusskabel zur Ansteuerung und Datenerfassung aufweist. Gemäß dem anmeldungsgemäßen Verfahren wird die Länge der Leitungsstruktur bis zu einem Kurzschluss, (z. B. Kolben als Reflektionskörper beim Pneumatik- und Hydraulikzylinder) der auch verschiebbar ist, gemessen. Das entsprechend dem anmeldungsgemäßen Verfahren bereitgestellte Sendesignal wird in eine Leitungsstruktur eingespeist und vorzugsweise durch einen Kurzschluss, beispielsweise Zylinderkolben als Reflektionskörper reflektiert. Dadurch wird die Messung des Abstandes zwischen dem von der Koppelsonde definierten Einspeisepunkt und dem Kurzschluss der Leitungsstruktur durchgeführt. Der zu messende Abstand erfolgt hierbei durch Messung der Phasendifferenz zwischen Sende- und Empfangssignal.

Durch Messen des Abstandes zwischen dem von der Koppelsonde definierten Einspeisepunkten und dem Reflektionskörper unter Verwendung von mindestens zwei Sendesignalen als elektromagnetische Wellen mit unterschiedlicher Frequenz wird eine eindeutige Positionsbestimmung herbeigeführt, wenn die zu messende Leitungsstruktur kleiner als die Hälfte der verwendeten Wellenlänge ist. Diesbezüglich ist zu beachten, dass unabhängig von der gewählten Einkopplung für eine eindeutige Positionsbestimmung mindestens drei Messfrequenzen gewählt werden können. Demgegenüber hat sich in der Praxis die Nutzung von vier Frequenzen als vorteilhaft erwiesen, da insbesondere dadurch auch die Fehlertoleranz des Algorithmus erhöht wird.

Weitere vorteilhafte Ausgestaltungen der Erfindung sind Gegenstand der Unteransprüche.

Die Verwendung eines dielektrischen Sekundärrings dient als Anschlagsicherung des sich bewegenden Reflektionskörpers und wurde bei der elektromagnetischen Auslegung des Einspeisesystems berücksichtigt.

Es hat sich als besonders vorteilhaft herausgestellt, wenn die Leitungsstruktur ein Rundhohlleiter, vorzugsweise ein Zylinder mit Kolben, als Reflektionskörper ist. Ein derartiger Rundhohlleiter kann beispielsweise ein Pneumatikzylinder oder ein Hydraulikzylinder sein. Die bislang bestehenden Nachteile sind somit insbesondere für diese Anwendungen ausgeräumt.

Durch das Vorhandensein von Bohrungen in dem Einspeisungsblock, in die das Haltesystem, die Koppelsonde und der koaxiale Einspeisungsbereich einbringbar sind, ist eine einfache Montage gewährleistet und die gesamte Abstandsmessvorrichtung kann nahezu beliebig in bestehende Leitungsstrukturen integriert werden.

Gemäß Anspruch 5 hat es sich als vorteilhaft herausgestellt, wenn die Koppelsonde als Monopol-Anregungssytem ausgelegt ist und die Einspeisung der elektromagnetischen Welle koaxial erfolgt, so dass eine Rundhohlleiterwelle eingespeist werden kann, und über eine mehrstufig koaxiale Transformationsstufe auf den Monopol konvertiert. Über die mehrstufige koaxiale Transformationsstufe, welche eine plane Grundfläche aufweisen kann, auf der mittig ein elektrisch leitender Zylinder vorgesehen ist, und an den sich ein elektrisch leitender Stift als Innenleiter der koaxialen Einspeisung anschließt, wird erreicht, dass die gesamte Einspeisung auf einfache Weise erfolgt.

Das Haltesystem besteht aus Dielektrikum, z. B. Lexan, und dient zur Positionierung der Koppelsonde im Zylinder. Ferner sorgt es für die nötige mechanische Stabilität bei Druckbelastung (z. B. 10 bar im Pneumatikzylinder). In der Serienfertigung lässt sich der Einspeiseblock besonders kostengünstig realisieren, indem das Monopol-Anregungssystem in den Zylinderdeckel eingelegt wird und das dielektrische Haltesystem mittels Kunststoffspritzverfahren dieses mit dem Zylinderdeckel fest verbindet.

Gemäß Anspruch 8 wird eine elektromagnetische Welle im Hochfrequenzbereich zwischen 1 bis 25 GHz eingespeist. In der Abhängigkeit von den Dimensionen bzw. Ausmessungen des als Leitungsstruktur verwendeten Zylinders und Wellenmodus wird eine geeignete Frequenz gewählt, die über der unteren Grenzfrequenz des verwendeten Wellenmodus liegt.

Vorteilhafte Weiterbildungen sind Gegenstand der weiteren Unteransprüche.

Anhand der nachfolgenden Zeichnungen soll eine Ausgestaltung, der anmeldungsgemäßen Abstandsmessvorrichtung dargestellt werden.

Fig. 1    zeigt eine Schnittdarstellung der Abstandsmessvorrichtung in einer einge- bauten Leitungsstruktur;

Fig. 2    zeigt perspektivisch eine Explosionsdarstellung der anmeldungsgemäßen Abstandsmessvorrichtung (linke Seite) und der anmeldungsgemäßen Ab- standsmessvorrichtung im zusammengebauten Zustand (rechte Seite).

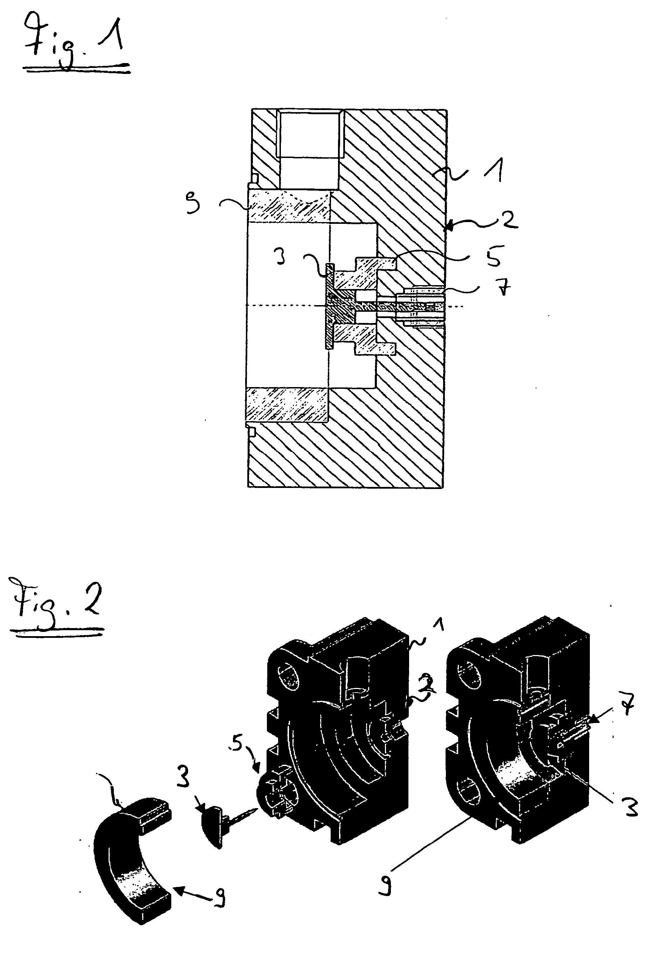

In Fig. 1 ist die anmeldungsgemäße Abstandsmessvorrichtung mit Leitungsstruktur 1 und Einspeiseblock mit Einspeisungsbereich 2 dargestellt, wobei der Einspeisungsbereich eine Koppelsonde 3 über ein dielektrisches Haltesystem 5 mit dem Wellenleiter 7 aufweist. Zusätzlich ist der dielektrische Sekundärring 9 dargestellt, der zum einen als mechanische Anschlagssicherung dient und als sekundäres Anpass- und Abstrahlsystem ausgelegt ist.

Deutlicher sind die jeweiligen Komponenten der anmeldungsgemäßen Abstandsmessvorrichtung in der Fig. 2 dargestellt, wobei die wesentlichen Komponenten, wie Einspeiseblock mit einem Einspeisungsbereich 2, in Explosionsdarstellung wiedergegeben sind. Deutlich ist ebenso zu erkennen, dass das dielektrische Haltesystem die als Monopol-Anregungssystem ausgestaltete Koppelsonde 3 hält, welche einen Stift enthält, der in einem koaxialen Wellenleiter aufnehmbar ist. Zusätzlich ist der dielektrische Sekundärring 9 dargestellt.

Zum besseren Verständnis soll die Funktionsweise der anmeldungsgemäßen Abstandsmessvorrichtung bzw. des Verfahrens zur Bestimmung des Abstandes klarer erläutert werden.

Das Einspeisesystem besteht aus einem koaxialen Monopol-Anregungssystem. Durch Einspeisung einer transversal elektromagnetischen Welle, d. h. TEM-Welle im koaxialen Einspeisungs- bzw. Eingangsbereich 3 wird durch das Monopolsystem eine Rundhohlleiterwelle mit dem charakteristischen E-Feldtyp der E01-Welle angeregt. Diese Welle breitet sich innerhalb des Laufzylinders in axialer Richtung aus. Trifft diese Welle auf einen Reflexionskörper, d. h. im Pneumatik- und Hydraulikzylinder den Kolben, wird die Welle reflektiert und über die Anregungssektion (Monopol) in das koaxiale Leitungssystem konvertiert und an einen HF-Transceiver (Sende- und Empfangseinheit) weitergeführt. Die Monopoleinspeisung besteht aus einer mehrstufigen koaxialen Transformationsstufe als Koppelsonde 3 mit einem dielektrischen Haltesystem 5 zur Positionierungs- und Druckstabilisierung. Ein zweiter dielektrischer Ring bzw. Sekundärring 9 im Abstrahlbereich des Monopoles, z.B. aus Lexan, dient als mechanische Anschlagsicherung des Kolbens und wurde als sekundäres Anpass- und Abstrahlsystem bei der elektrischen Auslegung des Monopols berücksichtigt.

Das anmeldungsgemäße Verfahren soll nunmehr anhand eines Pneumatikzylinders wiedergegeben werden. Hierbei wird der gesamte Pneumatikzylinder zwischen Kolbenstange und rückwärtigem Deckel z. B. als Rundhohlleiter betrachtet. Entsprechend den geometrischen Abmessungen des Zylinders wird die Sendefrequenz des Sensors so gewählt, dass eine monomodige Ausbreitung der elektromagnetischen Welle (im Beispiel im E01-Mode) möglich ist und dass die Anregung von Hohlleiterwellenmoden höherer Ordnung verhindert wird. Die Anregung von Hohlleitermoden niedrigerer Ordnung wird durch die Geometrie der Einspeisung verhindert. Die Anregung der elektromagnetischen Welle im Zylinder erfolgt z.B. über einen Monopol in der vorgestellten Art und Weise. Entsprechend dem Reflektometerprinzip breitet sich die Welle in dem Rundhohlleiter (=Pneumatikzylinder) aus und wird am Kolben (=Kurzschluss) reflektiert. Um die Entfernung zwischen Kolben und Koppelsonde kontinuierlich messen zu können, muss das Sendesignal moduliert werden. Dies kann in Form einer Frequenzmodulation erfolgen. Um hierbei eine hohe Entfernungsauflösung zu erzielen ist jedoch ein großer Frequenzhub erforderlich. In der Praxis vorteilhafter ist das Aussenden eines CW Signals, z. B. bei drei unterschiedlichen Frequenzen (Beispiel: 5.8 GHz, 6.0 GHz, 6.2 GHz) zur Festlegung eines eindeutigen Entfernungsbereiches mit jeweils anschließender Auswertung der Phasendifferenz zwischen Sende- und Empfangssignal als hochgenauen Messwert für die Entfernung zwischen Koppelsonde und Kolben. Die Zahl der zu verwendenden Frequenzen sowie deren Lage ist in erster Linie abhängig vom maximal zu messenden Abstand sowie von der notwendigen Fehlertoleranz gegenüber der Phasenwinkelmessung. Generell ist bei kleiner Frequenzdifferenz zwischen zwei Messfrequenzen der maximal messbare Abstand größer, allerdings bedingt die Unterscheidung zweier aufeinander folgender Perioden eine höhere Genauigkeit der Phasenwinkelmessung als bei größerer Frequenzdifferenz. Die Störsicherheit ist deshalb bei größeren Differenzen zwischen den einzelnen Messfrequenzen höher.

Soll ein großer Messbereich mit ausreichender Störsicherheit gemessen werden, so sind mehrere Messfrequenzen mit geeigneter Frequenzlage notwendig. Dadurch sind dann Frequenzpaare sowohl mit kleiner Differenz der Sendefrequenz (großer Messbereich) als auch mit großer Frequenzdifferenz (Störsicherheit) erforderlich.

Die Positionsgenauigkeit ist im wesentlichen bestimmt durch die Genauigkeit der Phasenwinkelmessung bei der höchsten Messfrequenz, weil dort die Wellenlänge am kleinsten ist. Es gilt die Formel:

## Wegänderung = Phasenwinkeländerung x Wellenlänge / 180°

Die Kolbenpositionsmessung mittels Mikrowelle beruht auf dem folgenden Prinzip: Eine elektromagnetische Welle geeigneter Frequenz wird in den Zylinder eingekoppelt. Der Zylinder selbst fungiert als Leitungsstruktur für die Welle. Die Welle läuft im Zylinder bis zum Kolben als Reflektionskörper. Am Kolben wird die elektromagnetische Welle größtenteils reflektiert, da sich der Kolben elektrisch ähnlich einem Kurzschluss verhält. Die reflektierte Welle läuft den Zylinder zurück und wird über die selbe Struktur, über die auch die Einkopplung erfolgte, wieder aus dem Zylinder ausgekoppelt. Der Phasenwinkel zwischen dem eingekoppelten und dem reflektierten Signal wird gemessen. Ändert der Kolben seine Position, so ändert sich die Strecke, welche die elektromagnetische Welle im Zylinder zurücklegt. Durch die Streckenänderung kommt es zu einer Änderung der Signallaufzeit und damit auch zu einem anderen Phasenwinkel zwischen hinlaufender und reflektierter Welle. Deshalb kann die Phase zwischen hin- und rücklaufendem Signal als Maß für die Kolbenposition verwendet werden. Es ergibt sich folgender Zusammenhang zwischen Kolbenposition und Phasenwinkel $\varphi$:

$$\varphi = \frac{2x \times 360°}{\lambda} + \varphi_0$$

$\varphi_0$ ist dabei ein Phasenoffset, der hauptsächlich durch die Zuleitung und die Einkopplung bestimmt wird. Er ist konstant und hat daher auf die eigentliche Positionsmessung keinen Einfluss. Aus obiger Gleichung ergibt sich auch die notwendige Phasenmessgenauigkeit um eine vorgegebene Positionsmessgenauigkeit erreichen zu können.

Da bei einer Phasenmessung grundsätzlich nicht zwischen einem Phasenwinkel $\varphi$ und $\varphi + n*360°$ unterschieden werden kann, könnten bei der Verwendung von nur einer Frequenz nur Zylinder bis zu einem maximalen Kolbenhub $< \lambda/2$ vermessen werden. Bei Verwendung von zwei oder mehr Frequenzen ist es jedoch möglich, Kolben mit wesentlich größerer Länge zu vermessen. Bei zwei Frequenzen dürfen sich die beiden Wellenlängen nicht zu stark unterscheiden. Für einen Zylinder der Länge l gilt für die Wellenlängen:

$$\lambda_1 > \lambda_2 > \frac{2l\lambda_1}{2l + \lambda_1}$$

Da der Phasenwinkel des reflektierten Signals nicht direkt gemessen werden kann und somit die an einem Mischerausgang gemessene Spannung nicht direkt proportional der Kolbenposition ist, wird für die Positionssuche ein geeigneter Algorithmus benötigt. Da sich das Ausgangssignal periodisch wiederholt, muss vor allem sichergestellt sein, dass die Positionssuche eindeutig verläuft, d.h. es muss eindeutig bestimmbar sein in welcher Periode sich der Kolben befindet. Eine Möglichkeit der Positionsbestimmung wäre die Aufnahme vieler Messwerte während eines Frequenzsweeps. Diese Messwerte werden dann mittels einer FFT oder DFT in den Frequenzbereich transformiert. Aus der Position des Maximums des entstehenden Spektrums lässt sich dann die Position des Kolbens bestimmen. Solange man bei der Aufnahme der Messwerte keine Unterabtastung zulässt, können bei diesem Verfahren keine Mehrdeutigkeitsprobleme auftreten. Auch erhält man durch dieses Verfahren bereits ohne die Aufnahme einer Positionstabelle Werte für die Kolbenpositionen. Nachteilig ist die Tatsache, dass zum einen eine relativ große Zahl von Messpunkten aufgenommen werden muss und dass der Rechenaufwand relativ groß ist.

Eine andere Möglichkeit ist, nur bei wenigen Frequenzen zu messen und die Kolbenposition anhand von Positionstabellen zu bestimmen. Dabei werden einfach die gemessenen Werte mit den Werten der Punkte der Positionstabelle verglichen. Die ermittelte Position entspricht dann dem Tabellenwert, der den Messwerten am ähnlichsten ist. Nachteilig an diesem Verfahren ist, dass es eventuell zu Mehrdeutigkeiten kommen kann. Da eine direkte Phasenmessung nicht durchgeführt wird, kann die Eindeutigkeit nicht durch Einhalten der oben dargestellten Bedingung sichergestellt werden. Genauere Untersuchungen zeigen, dass es bei der Verwendung von nur zwei Messfrequenzen immer Punkte mit identischen Messwerten gibt, wenn der Zylinder länger als $\lambda/2$ ist. Da dies in der Praxis meist der Fall ist, sollte mit mindestens drei Frequenzen gearbeitet werden. Werden die drei Messfrequenzen geschickt gewählt, so gibt es dann keine Positionen mehr, bei denen alle drei Messwerte identisch sind. Allerdings müssen sich in der Praxis die Messwerte an zwei Kolbenpositionen um einen Mindestbetrag unterscheiden, um die Eindeutigkeit auch noch bei gewissen Messfehlern sicherstellen zu können. Daher kann insbesondere bei größeren Zylinderlängen die Nutzung von mehr als drei Frequenzen vorteilhaft sein. Außerdem wird dadurch auch die Messgenauigkeit erhöht, da Rauschen oder Messfehler, die nur bei einer Frequenz auftreten, unterdrückt werden.

**Patentansprüche**

1. Abstandsmessvorrichtung mit einer Auswerteelektronik und einer Sensoreinrichtung, die zumindest eine Koppelsonde (3) zur Einspeisung eines Sendesignals in eine Leitungsstruktur mit Reflektionskörper aufweist, wobei die Leitungsstruktur einen Einspeiseblock mit einem Einspeisungsbereich (2) aufweist, der einen HF-Transceiver über einen Wellenleiter mit dielektrischem Haltesystem (5) mit der Koppelsonde (3) verbindet,
**dadurch gekennzeichnet, dass**
die Koppelsonde (3) als ein mehrstufiges Transformationsmodul ausgelegt ist, das eine plane Grundfläche aufweist, auf der mittig ein Zylinder vorgesehen ist, an den sich ein Stift anschließt, über den der Einspeisungsbereich (2) mit der Koppelsonde (3) verbunden ist.

2. Abstandsmessvorrichtung nach Anspruch 1, wobei ein dielektrischer Sekundärring (9) vorgesehen ist.

3. Abstandsmessvorrichtung nach einem der Ansprüche 1 oder 2, wobei die Leitungsstruktur (1) ein Rundhohlleiter, vorzugsweise ein Zylinder mit Kolben als Reflektionskörper, ist.

4. Abstandsmessvorrichtung nach einem der Ansprüche 1 bis 3, wobei der Einspeisungsblock Bohrungen aufweist, in die das Haltesystem (5), die Koppelsonde (3) und der koaxiale Einspeisungsbereich (2) einbringbar sind.

5. Abstandsmessvorrichtung nach einem der Ansprüche 1 bis 4, wobei die Koppelsonde (3) als Monopol-Anregungssystem ausgelegt ist, und die Einspeisung der elektromagnetischen Welle koaxial erfolgt und über eine mehrstufige koaxiale Transformationsstufe auf den Monopol konvertiert wird.

6. Abstandsmessvorrichtung nach einem der Ansprüche 1 bis 5, wobei die Koppelsonde (3) als ein dreistufiges Transformationsmodul ausgelegt ist.

7. Abstandsmessvorrichtung nach einem der Ansprüche 1 bis 6, wobei über die Koppelsonde (3) das Sendesignal als eine elektromagnetische Welle im Hochfrequenzbereich eingespeist wird.

8. Abstandsmessvorrichtung nach Anspruch 7, wobei die elektromagnetische Welle im Hochfrequenzbereich zwischen 1 GHz bis 25 GHz eingespeist wird.

9. Abstandsmessvorrichtung nach einem der Ansprüche 1 bis 8, wobei über die Koppelsonde (3) mindestens zwei Sendesignale als elektromagnetische Wellen mit unterschiedlicher Frequenz ausgestrahlt werden.

10. Abstandsmessvorrichtung nach einem der Ansprüche 1 bis 9, wobei die eingekoppelte elektromagnetische Welle eine monomodige Ausbreitung aufweist, und zwar vorzugsweise im TEM-Mode bei koaxialer Struktur.

11. Abstandsmessvorrichtung nach einem der Ansprüche 1 bis 10, wobei die eingekoppelte elektromagnetische Welle eine monomodige Ausbreitung aufweist, und zwar vorzugsweise im E01-Mode beim Rundhohlleiter.

12. Abstandsmessvorrichtung nach einem der Ansprüche 1 bis 11, wobei die Sensoreinrichtung eine Hochfrequenz-Elektronik mit einem Sende- und Empfangszweig aufweist.

13. Verfahren zur Bestimmung eines Abstandes, insbesondere unter Verwendung einer Abstandsmessvorrichtung nach einem der Ansprüche 1 bis 12, welches die Schritte aufweist:

    a) Bereitstellen einer Leitungsstruktur (1) mit Reflektionskörper, die einen Einspeisungsblock mit einem Einspeisungsbereich (2) aufweist, der einen HF-Transceiver über einen Wellenleiter mit dielektrischem Haltesystem mit der Koppelsonde (3) verbindet, wobei die Koppelsonde (3) als ein mehrstufiges Transformationsmodul ausgelegt ist, das eine plane Grundfläche aufweist, auf der mittig ein Zylinder vorgesehen ist, an den sich ein Stift anschließt, über den der Einspeisungsbereich (2) mit der Koppelsonde (3) verbunden ist, sowie
    b) Messen des Abstandes zwischen dem von der Koppelsonde (3) definierten Einspeisepunkt und dem Reflektionskörper, wobei mindestens zwei Sendesignale als elektromagnetische Wellen mit unterschiedlicher Frequenz über die Koppelsonde (3) eingekoppelt, vorzugsweise ausgestrahlt und empfangen, werden.

14. Verfahren nach Anspruch 12, wobei das Messen des Abstandes durch eine jeweilige Auswertung der Phasendifferenz zwischen dem Sendesignal und dem Empfangssignal der elektromagnetischen Welle erfolgt.

**15.** Verfahren nach einem der Ansprüche 13 oder 14, wobei die Differenz bei mindestens zwei Sendefrequenzen der jeweiligen elektromagnetischen Welle klein, vorzugsweise 1 % des Absolutwertes, ist, um einen großen Messbereich abzudecken.

**16.** Verfahren nach einem der Ansprüche 13 oder 14, wobei die Differenz in den Frequenzen des Sendesignals der jeweiligen elektromagnetischen Welle groß, vorzugsweise 20% des Absolutwertes, ist, um eine große Störsicherheit zu erzielen.

**17.** Verfahren nach einem der Ansprüche 13 bis 16, wobei die Sendesignale kontinuierlich ausgestrahlt werden.

**18.** Verfahren nach einem der Ansprüche 11 bis 15, wobei drei Sendesignale als elektromagnetische Wellen über die Koppelsonde ausgestrahlt werden.

**Claims**

**1.** A distance measurement device comprising analysis electronics and a sensor device which has at least one coupling probe (3) for injecting a transmission signal into a conducting structure with a reflection body, the conducting structure having an injection block with an injection region (2) which connects an HF transceiver to the coupling probe (3) by means of a wave guide with a dielectric holding system (5),
**characterised in that**
the coupling probe (3) is designed as a multi-level transformation module that has a planar base on the centre of which a cylinder is provided to which a pin is attached by means of which the injection region (2) is connected to the coupling probe (3).

**2.** The distance measurement device according to Claim 1, a dielectric secondary ring (9) being provided.

**3.** The distance measurement device according to any of Claims 1 or 2, the conducting structure (1) being a circular wave guide, preferably a cylinder with a piston as a reflection body.

**4.** The distance measuring device according to any of Claims 1 to 3, the injection block having bore holes into which the holding system (5), the coupling probe (3) and the coaxial injection region (2) can be inserted.

**5.** The distance measurement device according to any of Claims 1 to 4, the coupling probe (3) being designed as a monopole excitation system, and the injection of the electromagnetic wave taking place coaxially and being converted onto the monopole by means of a multi-level coaxial transformation step.

**6.** The distance measurement device according to any of Claims 1 to 5, the coupling probe (3) being designed as a three-level transformation module.

**7.** The distance measurement device according to any of Claims 1 to 6, the transmission signal being injected by means of the coupling probe (3) as an electromagnetic wave in the high frequency range.

**8.** The distance measurement device according to Claim 7, the electromagnetic wave being injected in the high frequency range between 1 GHz and 25 GHz.

**9.** The distance measurement device according to any of Claims 1 to 8, at least two transmission signals being irradiated as electromagnetic waves with different frequencies by means of the coupling probe (3).

**10.** The distance measurement device according to any of Claims 1 to 9, the injected electromagnetic wave having monomodal propagation, and preferably in the TEM mode with a coaxial structure.

**11.** The distance measurement device according to any of Claims 1 to 10, the injected electromagnetic wave having a monomodal propagation, and preferably in the E01 mode with the circular wave guide.

**12.** The distance measurement device according to any of Claims 1 to 11, the sensor device having high-frequency electronics with a transmitting and receiving branch.

13. A method for determining a distance, in particular using a distance measurement device according to any of Claims 1 to 12 which has the steps:

    a) providing a conducting structure (1) with a reflection body which has an injection block with an injection region (2) which connects an HF transceiver to the coupling probe (3) by means of a wave guide with a dielectric holding system, the coupling probe (3) being designed as a multi-level transformation module that has a planar base on the centre of which a cylinder is provided to which a pin is attached by means of which the injection region (2) is connected to the coupling probe (3), and

    b) measuring the distance between the injection point defined by the coupling probe (3) and the reflection body, at least two transmission signals being injected, preferably irradiated and received, as electromagnetic waves with different frequencies by means of the coupling probe (3).

14. The method according to Claim 12, the distance being measured by a respective analysis of the phase difference between the transmission signal and the receipt signal of the electromagnetic wave.

15. The method according to either of Claims 13 or 14, the difference with at least two transmission frequencies of the respective electromagnetic wave being small, preferably 1 % of the absolute value in order to cover a large measuring range.

16. The method according to either of Claims 13 or 14, the difference in the frequencies of the transmission signal of the respective electromagnetic wave being large, preferably 20% of the absolute value, in order to achieve a high level of interference resistance.

17. The method according to any of Claims 13 to 16, the transmission signals being irradiated continuously.

18. The method according to any of Claims 11 to 15, three transmission signals being irradiated via the coupling probe as electromagnetic waves.


**Revendications**

1. Dispositif de mesure de distance comprenant une électronique d'évaluation et un dispositif de détection présentant au moins une sonde de couplage (3) pour injecter un signal d'émission dans une structure conductrice comportant un corps réflecteur, ladite structure conductrice comprenant un bloc d'injection présentant une zone d'injection (2) reliant un émetteur-récepteur haute fréquence à la sonde de couplage (3) par l'intermédiaire d'un guide d'ondes pourvu d'un système de maintien diélectrique (5),
   **caractérisé en ce que**
   la sonde de couplage (3) est conçue sous la forme d'un module de transformation à plusieurs étages présentant une surface de base plane au centre de laquelle est prévu un cylindre auquel est ajointe une tige par l'intermédiaire de laquelle la zone d'injection (2) est reliée à la sonde de couplage (3).

2. Dispositif de mesure de distance selon la revendication 1, dans lequel il est prévu un anneau secondaire (9) diélectrique.

3. Dispositif de mesure de distance selon l'une des revendications 1 ou 2, dans lequel la structure conductrice (1) est un guide d'ondes circulaire, de préférence un cylindre comportant un piston comme corps réflecteur.

4. Dispositif de mesure de distance selon l'une des revendications 1 à 3, dans lequel le bloc d'injection présente des évidements dans lesquels peuvent être introduits le système de maintien (5), la sonde de couplage (3) et la zone d'injection (2) coaxiale.

5. Dispositif de mesure de distance selon l'une des revendications 1 à 4, dans lequel la sonde de couplage (3) est conçue sous la forme d'un système d'excitation par monopôle, et l'injection de l'onde électromagnétique se produit de manière coaxiale et est convertie sur le monopôle par l'intermédiaire d'une étape de transformation coaxiale à plusieurs étages.

6. Dispositif de mesure de distance selon l'une des revendications 1 à 5, dans lequel la sonde de couplage (3) est conçue sous la forme d'un module de transformation à trois étages.

**7.** Dispositif de mesure de distance selon l'une des revendications 1 à 6, dans lequel le signal d'émission est injecté, par l'intermédiaire de la sonde de couplage (3), sous la forme d'une onde électromagnétique dans la plage des hautes fréquences.

**8.** Dispositif de mesure de distance selon la revendication 7, dans lequel l'onde électromagnétique dans la plage des hautes fréquences est injectée entre 1 GHz et 25 GHz.

**9.** Dispositif de mesure de distance selon l'une des revendications 1 à 8, dans lequel au moins deux signaux d'émission sont émis par l'intermédiaire de la sonde de couplage (3) sous la forme d'ondes électromagnétiques de fréquences différentes.

**10.** Dispositif de mesure de distance selon l'une des revendications 1 à 9, dans lequel l'onde électromagnétique injectée présente une propagation monomodale, à savoir de préférence dans la mode TEM dans le cas d'une structure coaxiale.

**11.** Dispositif de mesure de distance selon l'une des revendications 1 à 10, dans lequel l'onde électromagnétique injectée présente une propagation monomodale, à savoir de préférence dans la mode E01 dans le cas d'un guide d'ondes circulaire.

**12.** Dispositif de mesure de distance selon l'une des revendications 1 à 11, dans lequel le dispositif de détection présente une électronique haute fréquence pourvue d'une branche d'émission et de réception.

**13.** Procédé de détermination d'une distance, mettant notamment en oeuvre un dispositif de mesure de distance selon l'une des revendications 1 à 12, comportant les étapes consistant à :

a) mettre à disposition une structure conductrice (1) comportant un corps réflecteur présentant un bloc d'injection comportant une zone d'injection (2) qui relie un émetteur-récepteur haute fréquence à la sonde de couplage (3) par l'intermédiaire d'un guide d'ondes pourvu d'un système de maintien diélectrique, la sonde de couplage (3) étant conçue sous la forme d'un module de transformation à plusieurs étages, présentant une surface de base plane au centre de laquelle est prévu un cylindre auquel est ajointe une tige par l'intermédiaire de laquelle la zone d'injection (2) est reliée à la sonde de couplage (3), ainsi qu'à
b) mesurer la distance entre le point d'injection défini par la sonde de couplage (3) et le corps réflecteur, deux signaux d'émission au moins étant injectés, de préférence émis et reçus, sous la forme d'ondes électromagnétiques de fréquences différentes, par l'intermédiaire de la sonde de couplage (3).

**14.** Procédé selon la revendication 12, dans lequel la mesure de la distance s'effectue par une évaluation respective de la différence de phase entre le signal d'émission et le signal de réception de l'onde électromagnétique.

**15.** Procédé selon l'une des revendications 13 ou 14, dans lequel la différence pour au moins deux fréquences d'émission de l'onde électromagnétique respective est faible, correspondant de préférence à 1 % de la valeur absolue, pour couvrir une plage de mesure importante.

**16.** Procédé selon l'une des revendications 13 ou 14, dans lequel la différence pour les fréquences du signal d'émission de l'onde électromagnétique respective est importante, correspondant de préférence à 20 % de la valeur absolue, pour obtenir une immunité au bruit élevée.

**17.** Procédé selon l'une des revendications 13 à 16, dans lequel les signaux d'émission sont émis en continu.

**18.** Procédé selon l'une des revendications 11 à 15, dans lequel trois signaux d'émission sont émis sous la forme d'ondes électromagnétiques par l'intermédiaire de la sonde de couplage.

Fig. 1

Fig. 2

EP 2 078 922 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0935127 A